(19) Europäisches Patentamt

European Patent Office

Office européen des brevets

(11) Veröffentlichungsnummer: **0 372 369**
**A2**

## (12) EUROPÄISCHE PATENTANMELDUNG

(21) Anmeldenummer: **89122025.3**

(22) Anmeldetag: **29.11.89**

(51) Int. Cl.⁵: **H04B 1/10**

(30) Priorität: **06.12.88 DE 3840999**

(43) Veröffentlichungstag der Anmeldung:
**13.06.90 Patentblatt 90/24**

(84) Benannte Vertragsstaaten:
**CH DE FR GB LI SE**

(71) Anmelder: **Blaupunkt-Werke GmbH
Robert-Bosch-Strasse 200
D-3200 Hildesheim(DE)**

(72) Erfinder: **Kässer, Jürgen, Dr.
Ahornweg 5
D-3201 Diekholzen(DE)**

(74) Vertreter: **Eilers, Norbert, Dipl.-Phys.
Blaupunkt-Werke GmbH
Robert-Bosch-Strasse 200
D-3200 Hildesheim(DE)**

(54) Schaltungsanordnung zur Unterdrückung schmalbandiger Störsignale.

(57) Bei einer Schaltungsanordnung zur Unterdrückung schmalbandiger Störsignale beim Empfang von frequenzmodulierten Signalen werden Zwischenfrequenzsignale über ein Kerbfilter geleitet. Die derart gefilterten Zwischenfrequenzsignale sind einem Demodulator zuführbar.

Fig. 1

EP 0 372 369 A2

## Schaltungsanordnung zur Unterdrückung schmalbandiger Störsignale

Die Erfindung geht aus von einer Schaltungsanordnung nach der Gattung des Hauptanspruchs.

Durch die Verwendung digitaler Schaltungen mit Quarzoszillatoren entstehen häufig störende Oberwellen im Bereich der Ultrakurzwellen. Aufgabe der vorliegenden Erfindung ist es, Störungen durch diese monofrequenten Signale oder anderer schmalbandigen Störsignale zu vermeiden.

Die erfindungsgemäße Schaltungsanordnung mit den kennzeichnenden Merkmalen des Hauptanspruchs hat den Vorteil, daß das Störsignal praktisch vollständig unterdrückt wird, während das Nutzsignal nicht merkbar beeinträchtigt wird.

Die erfindungsgemäße Schaltungsanordnung nutzt in geschickter Weise die unterschiedliche spektrale Breite des frequenzmodulierten Signals und des Störsignals zur Unterdrückung des Störsignals aus.

Durch die in den Unteransprüchen aufgeführten Maßnahmen sind vorteilhafte Weiterbildungen und Verbesserungen der im Hauptanspruch angegebenen Erfindung möglich. Insbesondere können mehrere Frequenzen von Störsignalen gespeichert und jeweils dasjenige Störsignal unterdrückt werden, das in den Frequenzbereich des jeweils zu empfangenen Senders fällt.

Während die Erfindung an sich von einer bekannten Frequenz des Störsignals ausgeht, ermöglicht eine Weiterbildung der Erfindung die Ermittlung der Frequenz des Störsignals.

Andere Weiterbildungen der Erfindung umfassen die Auswahl einer Frequenz, welche in das Frequenzband eines empfangenen Senders fällt, aus einer Mehrzahl von Frequenzen von Störsignalen.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild eines ersten Ausführungsbeispiels und

Fig. 2 ein Blockschaltbild eines zweiten Ausführungsbeispiels.

Gleiche Teile sind in den Figuren mit gleichen Bezugszeichen versehen.

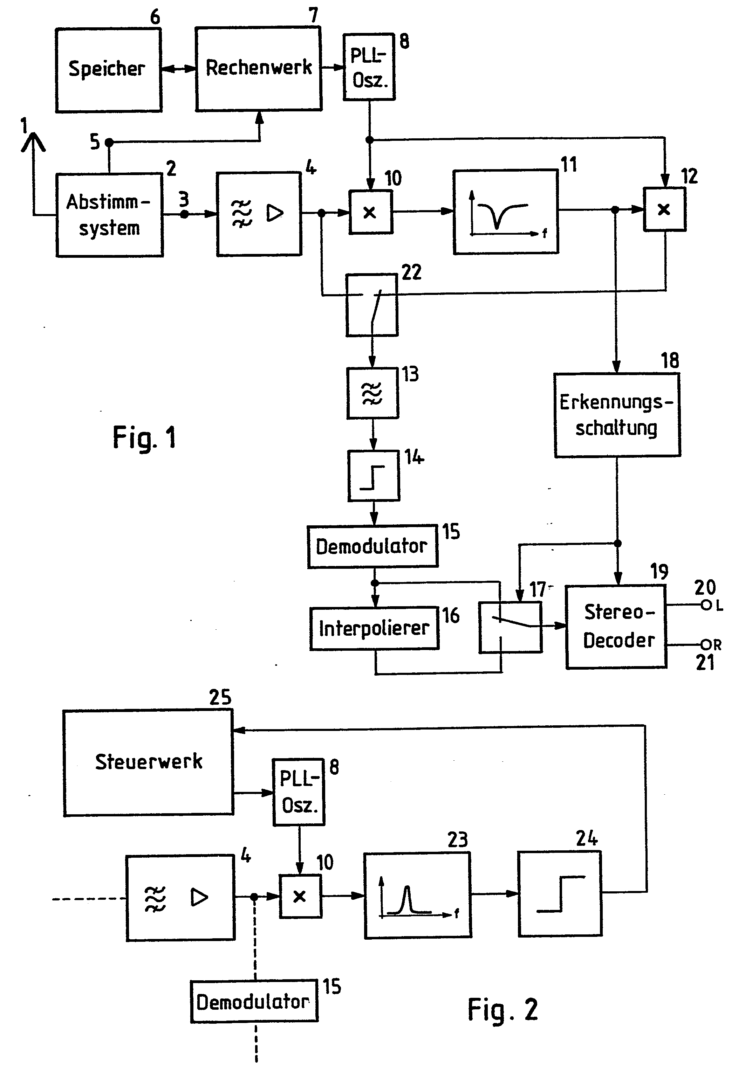

Bei der Schaltungsanordnung nach Fig. 1 werden die von der Antenne 1 empfangenen Signale einem Abstimmsystem 2 zugeführt, das in an sich bekannter Weise Vorstufen, eine Mischstufe und ein digitales Oszillatorsystem enthält. Das entstandene Zwischenfrequenzsignal wird über einen Ausgang 3 einem Zwischenfrequenzverstärker 4 zugeleitet, der kein üblicher Begrenzerverstärker, sondern ein geregelter Verstärker ist. An einem weiteren Ausgang 5 des Abstimmsystems steht diejenige Frequenz, auf welche der Empfänger jeweils abgestimmt ist, als numerischer Wert zur Verfügung.

In einem nichtflüchtigen Speicher 6 sind gegebenenfalls mehrere Frequenzen von Störern abgelegt, welche in dem gesamten von der dargestellten Empfangseinrichtung empfangbaren Frequenzbereich liegen. Mit Hilfe eines Rechenwerks 7 wird diejenige Frequenz aus dem Speicher 6 ausgelesen, welche in das Frequenzband des empfangenen Senders fällt. Danach wird die Differenz beider Frequenzen errechnet. In Abhängigkeit davon wird ein mit Hilfe einer Phasenregelschleife steuerbarer Oszillator 8 auf eine Frequenz gesteuert, welche die nachfolgend beschriebene Umsetzung des Zwischenfrequenzsignals gestattet.

Das Zwischenfrequenzsignal, welches ohne Begrenzung, jedoch eventuell amplitudengeregelt den Zwischenfrequenzverstärker 4 verläßt, wird zusammen mit dem Ausgangssignal des Oszillators 8 einer Mischschaltung 10 zugeführt. Damit erfolgt die Umsetzung derart, daß die Spektrallinie im Zwischenfrequenzsignal, welche dem Störsignal entspricht, auf die Resonanzfrequenz des Kerbfilters 11 umgesetzt wird. Das Ausgangssignal des Kerbfilters ist damit von der Störung befreit. Es ergibt sich jedoch ein kurzzeitiger Einbruch des Nutzsignals, wenn die Frequenz des umgesetzten Zwischenfrequenzsignals den Sperrbereich des Kerbfilters durchläuft. Damit zur Demodulation die üblichen Schaltungen verwendet werden können, ist eine erneute Umsetzung des Zwischenfrequenzsignals in den ursprünglichen Frequenzbereich vorgesehen. Dazu wird das Ausgangssignal des Kerbfilters 11 zusammen mit dem Ausgangssignal des Oszillators 8 einer weiteren Mischschaltung 12 zugeführt.

Das Ausgangssignal der Mischschaltung 12 wird in an sich bekannter Weise bei 13 bzw. 14 band- und amplitudenbegrenzt und mit Hilfe eines Demodulators 15 demoduliert. Anschließend werden die durch das Kerbfilter 11 verursachten Einbrüche im Niederfrequenzsignal durch Interpolation beseitigt. Dazu wird das Ausgangssignal des Demodulators 15 einerseits direkt und andererseits über einen Interpolierer 16 einem Umschalter 17 zugeführt, welcher von einer Erkennungsschaltung 18 steuerbar ist. Das Ausgangssignal des Umschalters 17 wird in an sich bekannter Weise einem Stereo-Decoder 19 zugeleitet, so daß an den Ausgängen 20, 21 die Niederfrequenzsignale L, R für die beiden Tonkanäle zur Verfügung stehen. Bei dem dargestellten Ausführungsbeispiel ist ferner ein Umschalter 22 vorgesehen, mit welchem das Kerbfilter 11 und die beiden Mischschaltungen 10 und 12 für den Fall umgangen werden können, daß die Störbefreiung nicht erwünscht sein sollte.

Gemäß einer Weiterbildung der Erfindung kann der Stereo-Decoder 17 von der Erkennungsschaltung 16 derart gesteuert werden, daß während des gestörten Empfangs von Stereo- auf Monowiedergabe umgeschaltet wird. Je nach Voraussetzungen im einzelnen kann als Kerbfilter ein AM-ZF-Filter verwendet werden, bei welchem durch Differenzbildung zwischen dem Eingangs- und dem Ausgangssignal der Frequenzgang invertiert wird.

Während das Ausführungsbeispiel nach Fig. 1 davon ausgeht, daß eine oder mehrere Störfrequenzen bekannt sind, kann mit der Schaltungsanordnung nach Fig. 2 die Frequenz sowie die Existenz eines Störers ermittelt werden. Die Schaltung nach Fig. 2 stellt insofern einen Spektrum-Analysator dar. Dazu wird das Kerbfilter als Bandpaß 23 umgeschaltet, dessen Ausgangsspannung über einen Schwellwertdetektor 24 geleitet wird. Ein Steuerwerk 25 verursacht ein langsames Durchstimmen des Oszillators 8, so daß das gesamte zu empfangene Frequenzband oder das Frequenzband des jeweiligen Senders untersucht wird. Sobald mit Hilfe des Schwellwertdetektors 24 ein Störsignal erkannt wird, wird die Frequenz des Störsignals in den Speicher 6 (Fig. 1) eingeschrieben, gegebenenfalls nach weiteren Störsignalen gesucht und auf den im Zusammenhang mit Fig. 1 beschriebenen Empfangsbetrieb umgeschaltet. Der Schwellwert kann gegebenenfalls in Abhängigkeit von dem mittleren Empfangspegel gesteuert werden.

## Ansprüche

1. Schaltungsanordnung zur Unterdrückung schmalbandiger Störsignale beim Empfang von frequenzmodulierten Signalen, dadurch gekennzeichnet, daß Zwischenfrequenzsignale über ein Kerbfilter (11) geleitet werden und daß die derart gefilterten Zwischenfrequenzsignale einem Demodulator (15) zuführbar sind.

2. Schaltungsanordnung nach Anspruch 1, dadurch gekennzeichnet, daß die Ausgangssignale des Demodulators (15) einem schaltbaren Interpolierer (16) zuführbar sind.

3. Schaltungsanordnung nach Anspruch 2, dadurch gekennzeichnet, daß die Differenz zwischen der Frequenz des Störers und der Empfangsfrequenz ermittelt wird und daß in Abhängigkeit von der Differenz das Zwischenfrequenzsignal derart umgesetzt wird, daß die Frequenz des Störsignals der Resonanzfrequenz des Kerbfilters (11) entspricht.

4. Schaltungsanordnung nach Anspruch 3, dadurch gekennzeichnet, daß das Ausgangssignal des Kerbfilters (11) wieder in den Frequenzbereich des Zwischenfrequenzsignals umgesetzt wird.

5. Schaltungsanordnung nach Anspruch 3, dadurch gekennzeichnet, daß die Frequenz eines Störsignals in einem Speicher abgelegt ist.

6. Schaltungsanordnung nach Anspruch 5, dadurch gekennzeichnet, daß zur Ermittlung der Differenz zwischen der Frequenz des Störsignals und der Frequenz des Empfangssignals ein Rechenwerk (7) vorgesehen ist, an dessen Ausgang über eine Phasenregelschaltung ein steuerbarer Oszillator (8) angeschlossen ist.

7. Schaltungsanordnung nach Anspruch 3, dadurch gekennzeichnet, daß in einem Speicher Frequenzen mehrerer Störsignale abgelegt sind und daß diejenige Frequenz aus dem Speicher ausgelesen wird, welche in das Frequenzband eines empfangenen Senders fällt.

8. Schaltungsanordnung nach Anspruch 7, dadurch gekennzeichnet, daß zur Errechnung der Differenz zwischen der ausgelesenen Frequenz und der Frequenz des Empfangssignals ein Rechenwerk (7) vorgesehen ist, an dessen Ausgang über eine Phasenregelschaltung ein steuerbarer Oszillator (8) angeschlossen ist.

9. Schaltungsanordnung nach Anspruch 1, dadurch gekennzeichnet, daß durch automatisches Abstimmen durch das Frequenzband eines empfangenen Senders und gleichzeitiges Messen des Ausgangssignals des Kerbfilters (11) die Frequenz des Störsignals ermittelt wird.

10. Schaltungsanordnung nach Anspruch 1, dadurch gekennzeichnet, daß ein Zwischenfrequenzfilter für den Empfang amplitudenmodulierter Signale als Kerbfilter (11) verwendet wird.

11. Schaltungsanordnung nach Anspruch 1, dadurch gekennzeichnet, daß während des gestörten Empfangs eine Umschaltung von Stereo- auf Mono-Empfang erfolgt.

R.-Nr. 2030

Speicher 6

Rechenwerk 7

PLL-Osz. 8

1

5

Abstimm-system 2

3

≈ ▷ 4

× 10

11

12

22

≈ 13

⌐ 14

Demodulator 15

Erkennungs-schaltung 18

17

Interpolierer 16

Stereo-Decoder 19

L 20

R 21

Fig. 1

Steuerwerk 25

PLL-Osz. 8

≈ ▷ 4

× 10

23

24

Demodulator 15

Fig. 2